# EUROPÄISCHE PATENTSCHRIFT

(11) **EP 3 079 960 B1**
(45) Veröffentlichungstag und Bekanntmachung des Hinweises auf die Patenterteilung: **07.02.2018**
(21) Anmeldenummer: 14815603.7
(22) Anmeldetag: 05.12.2014
(51) Int. Cl.: B60W 30/14, B60W 30/18, B60W 50/00

(54) **VORRICHTUNGEN UND VERFAHREN ZUM AUSGLEICHEN EINER FAHRTRICHTUNGSABHÄNGIGEN LÄNGSGESCHWINDIGKEITSBEEINFLUSSUNG**
DEVICES AND METHODS FOR COMPENSATING FOR A LONGITUDINAL VELOCITY INFLUENCE THAT IS DEPENDENT ON A DIRECTION OF TRAVEL
DISPOSITIFS ET PROCÉDÉS DE COMPENSATION D'UNE INFLUENCE DE LA VITESSE LONGITUDINALE FONCTION DU SENS DE DÉPLACEMENT

(30) Priorität: 11.12.2013 DE 102013113872
(43) Veröffentlichungstag der Anmeldung: 19.10.2016
(73) Patentinhaber: Audi AG, 85049 Ingolstadt (DE); AVL Deutschland GmbH, 55252 Mainz-Kastel (DE)
(72) Erfinder: REIFF, Moritz, 85354 Freising (DE); LEPCZYK, Daniel, 86529 Schrobenhausen (DE); DIETRICH, Maximilian, 81245 München (DE)
(74) Vertreter: Hofstetter, Schurack & Partner
(86) Internationale Anmeldenummer: PCT/EP2014/076700
(87) Internationale Veröffentlichungsnummer: WO 2015/086451

(56) Entgegenhaltungen:
- EP-A1- 2 106 953
- EP-A2- 1 415 850
- DE-T2- 60 214 637
- US-A1- 2005 222 739
- US-A1- 2013 006 493

## Beschreibung

Die vorliegende Erfindung betrifft eine Steuerungsvorrichtung, die eine erste Vorrichtung zum Ermitteln einer ersten Vorgabe für einen Vortriebsbewegungsparameter eines Fahrzeugs, einen Gierbewegungserfasser zum Ermitteln einer Gierbewegungsgröße des Fahrzeugs und einen Längsgeschwindigkeitsbeeinflusser zum Beeinflussen einer Längsgeschwindigkeit des Fahrzeugs umfasst. Die erste Vorrichtung weist einen ersten Ausgang zum Ausgeben der ersten Vorgabe auf. Der Gierbewegungserfasser weist einen zweiten Ausgang zum Ausgeben der ermittelten Gierbewegungsgröße auf.

Außerdem betrifft die Erfindung ein Fahrzeug, das eine solche Steuerungsvorrichtung aufweist.

Darüber hinaus betrifft die Erfindung ein Verfahren zum Ausgleichen einer fahrtrichtungsabhängigen Längsgeschwindigkeitsbeeinflussung eines Fahrzeugs.

Die DE 10 2010 005 889 A1 schlägt eine Anpassung von Motorleistung an einen Lenkradwinkel vor, um die Motorleistung an eine Motorlast anzupassen, die von einem hydraulischen Servolenkungssystem verursacht wird und von dem Lenkradwinkel abhängig ist.

In der DE 602 14 637 T2 ist ein Steuersystem zur Verwendung in einem Fahrzeug und zum Beeinflussen eines Giergeschwindigkeitssignals, das für ein Kraftfahrzeug-Teilsystem vorgesehen ist, beschrieben. Das Steuersystem umfasst ein Referenzmodell, das Sollzustände des Teilsystems berechnen kann, eine Zustandsschätzeinrichtung, die Istzustände des Fahrzeugs schätzt und Steuer- und Regelungsmittel. Die Steuer- und Regelungsmittel weisen dabei einen Feedforward-Regler, der einen ersten Lenk-Teilsystem-Stellwert und einen ersten Brems-Teilsystem-Stellwert anhand von dem Referenzmodell berechnet, einen Feedback-Regler, der einen zweiten Lenk-Teilsystem-Stellwert und einen zweiten Brems-Teilsystem-Stellwert anhand der Giergeschwindigkeit des Fahrzeugs berechnet, und Mittel zum Beeinflussen des Bremssystems und des Vorderrad- und/oder Hinterradlenksystems anhand der ersten und der zweiten Lenk- und Brems-Teilsystem-Stellwerte.

In der US 2013/0006493 A1 ist eine Antriebskraft-Steuervorrichtung für ein Fahrzeug beschrieben. Die Antriebskraft-Steuervorrichtung umfasst eine Antriebskraftunterdrückungsverarbeitungseinheit und eine Steuereinheit. Die Antriebskraftunterdrückungsverarbeitungseinheit führt eine Antriebskraftunterdrückungsverarbeitung aus, um eine Antriebskraft einer Antriebsmaschine unter eine Antriebskraft, welche einem Beschleunigerbetätigungsbetrag entspricht, zu setzen. Die Steuereinheit ändert eine Antriebs-Farce-Ausgabe während der Ausführung der Antriebskraftunterdrückungsverarbeitung in Übereinstimmung mit einem Lenkwinkel des Fahrzeugs.

Insbesondere bei Elektrofahrzeugen, deren Lenksystem entweder keinen lenkradwinkelabhängigen Leistungsbedarf aufweist, oder die mit dem bekannten System zum vollständigen Ausgleich einer Lenkradwinkelabhängigkeit des Leistungsbedarfs eines Lenkungssystems ausgerüstet sind, wurde folgende Eigenschaft beobachtet. Wird das Lenkrad beim Kriechen (Rollen mit eingelegter Fahrstufe ohne Betätigung des Fahrpedals) abrupt eingeschlagen, verlangt sich das Fahrzeug solange, bis eine Regelung greift und dem Längsgeschwindigkeitseinbruch entgegenwirkt.

Es ist eine Aufgabe der vorliegenden Erfindung, eine Steuerungsvorrichtung bereitzustellen, mit der der Längsgeschwindigkeitseinbruch vollständig oder zumindest teilweise vermieden werden kann. Außerdem ist es eine Aufgabe der Erfindung, ein Fahrzeug mit dieser Verbesserung bereitzustellen. Darüber ist es eine Aufgabe der Erfindung, ein entsprechendes Verfahren zum Ausgleichen einer fahrtrichtungsabhängigen Längsgeschwindigkeitsgeschwindigkeitsbeeinflussung eines Fahrzeugs bereitzustellen.

Diese Aufgabe wird erfindungsgemäß durch eine Steuerungsvorrichtung für ein Fahrzeug gemäß Patentanspruch 1, ein Fahrzeug gemäß Anspruch 9 und ein Verfahren gemäß Anspruch 10 gelöst. Vorteilhafte Weiterbildungen der vorliegenden Erfindungen sind in den Unteransprüchen angegeben.

Erfindungsgemäß umfasst eine Steuerungsvorrichtung eine erste Vorrichtung zum Ermitteln einer ersten Vorgabe für einen Vortriebsbewegungsparameter eines Fahrzeugs, einen Gierbewegungserfasser zum Ermitteln einer Gierbewegungsgröße des Fahrzeugs, einen Längsgeschwindigkeitsbeeinflusser zum Beeinflussen einer Längsgeschwindigkeit des Fahrzeugs und einen Vorsteuergrößenerzeuger zum Erzeugen einer Vorsteuergröße. Die erste Vorrichtung weist einen ersten Ausgang zum Ausgeben der ersten Vorgabe auf. Der Gierbewegungserfasser weist einen zweiten Ausgang zum Ausgeben der ermittelten Gierbewegungsgröße auf. Der Vorsteuergrößenerzeuger weist einen ersten Eingang auf, der mit dem ersten Ausgang verbunden ist, und einen zweiten Eingang, der mit dem zweiten Ausgang verbunden ist, und einen dritten Ausgang, der mit einem Vorsteuereingang des Längsgeschwindigkeitsbeeinflussers verbunden ist.

Entsprechend umfasst ein erfindungsgemäßes Fahrzeug eine erfindungsgemäße Steuerungsvorrichtung.

Ein erfindungsgemäßes Verfahren zum Ausgleichen einer fahrtrichtungsabhängigen Längsgeschwindigkeitsbeeinflussung eines Fahrzeugs umfasst folgende Schritte: Ermitteln einer Vorgabe für einen Vortriebsbewegungsparameter des Fahrzeugs; Ermitteln einer Gierwinkelgeschwindigkeit und/oder einer Gierwinkelbeschleunigung des Fahrzeugs; Ermitteln einer Vorsteuergröße unter Berücksichtigung der ermittelten Vorgabe für den Vortriebsbewegungsparameter und unter Berücksichtigung der ermittelten Gierwinkelgeschwindigkeit und/oder der ermittelten Gierwinkelbeschleunigung des Fahrzeugs; und Verwenden der Vorsteuergröße in einem Längsgeschwindigkeitsbeeinflusser des Fahrzeugs.

Ein Konzept der vorliegenden Erfindung kann darin gesehen werden, eine Gierbewegungsgröße zu erfassen und die erfasste Gierbewegungsgröße als Vorsteuersignal für einen Längsgeschwindigkeitsbeeinflusser (beispielsweise einen Längsgeschwindigkeitsregler, einen Bremsregler, einen Antriebsregler, einen Getrieberegler, einen Kupplungsregler oder einen Antriebsmomentenverteiler) zu nutzen, damit der Längsgeschwindigkeitsbeeinflusser auf die Gierbewegung nicht erst durch Nachregelung reagiert, wenn bereits eine Geschwindigkeitsverringerung eingetreten ist, die aufgrund einer tatsächlichen oder geplanten Gierbewegung schon vorher vorhersehbar war. Beispielsweise kann in Abhängigkeit eines erfassten oder noch einzustellenden Lenkwinkels ein Antriebsmoment vorgesteuert werden, welches einen Fahrwiderstand ausgleicht, der durch eine Verschränkung von gelenkten Rädern entsteht. Das Vorsteuermoment kann bei der Berechnung von Vortriebsmomenten im Antriebsstrang berücksichtigt werden. Insbesondere kann es zweckmäßig sein, dass das Vorsteuermoment von einer Gierwinkelbeschleunigung, von einer Lenkwinkel-Änderungsgeschwindigkeit und/oder von einer Fahrzeuggeschwindigkeit abhängig ist.

Wenn die erfasste Gierbewegungsgröße als Vorsteuersignal für den Längsgeschwindigkeitsbeeinflusser genutzt wird, kann ein (vorübergehender) Geschwindigkeitseinbruch beim Ändern des Lenkwinkels und/oder beim Ändern einer Giergeschwindigkeit zumindest teilweise ausgeglichen werden. Damit wird ein Fahrverhalten des Fahrzeugs vermieden, das aus Sicht von Fahrzeugnutzern unlogisch ist, und es wird ein Fahrkomfort und/oder eine Verkehrssicherheit verbessert.

Besonders bevorzugt ist, wenn die Gierbewegungsgröße eine Gierwinkelgeschwindigkeit und/oder eine Gierwinkelbeschleunigung umfasst. Ein Teil des Fahrwiderstandes kann in erster Linie von einer Gierwinkelgeschwindigkeit, von einer Gierwinkelbeschleunigung oder von beidem zugleich abhängig sein. Die Gierwinkelgeschwindigkeit kann auch als Gierrate bezeichnet werden.

Es ist von Vorteil, wenn der Gierbewegungserfasser dazu vorbereitet ist, die Gierwinkelgeschwindigkeit aus einer Radstellung, einem Lenkeinschlag und/oder einem Lenkradwinkel in Verbindung mit einer Fahrzeuglängsgeschwindigkeit abzuleiten. So kann die Gierwinkelgeschwindigkeit in einfacher Weise ermittelt werden.

Alternativ oder zusätzlich kann es auch zweckmäßig sein, wenn der Gierbewegungserfasser dazu vorbereitet ist, die Gierwinkelbeschleunigung aus einer Radstellung, aus einem Lenkeinschlag und/oder aus einem Lenkradwinkel in Verbindung mit einer Fahrzeuglängsbeschleunigung abzuleiten. Unabhängig davon ist es vorstellbar, dass der Gierbewegungserfasser dazu vorbereitet ist, die Gierwinkelbeschleunigung aus einer Radstellungsänderung, aus einer Lenkeinschlagsänderung und/oder aus einer Lenkradwinkeländerung in Verbindung mit einer Fahrzeuglängsgeschwindigkeit und/oder in Verbindung mit einer Fahrzeuglängsbeschleunigung abzuleiten. Durch jede dieser Maßnahmen oder durch eine Kombination dieser Maßnahmen kann in einfacher Weise die Gierwinkelbeschleunigung ermittelt werden.

Auch kann es zweckmäßig sein, wenn ein Verlauf der Vorsteuergröße über der Gierbewegungsgröße oder über dem Lenkeinschlag oder über dem Lenkradwinkel progressiv verläuft. Hiermit kann eine nichtlinearer Zusammenhang zwischen Fahrwiderstand und Lenkeinschlag oder zwischen Fahrwiderstand und Lenkradwinkel berücksichtigt werden.

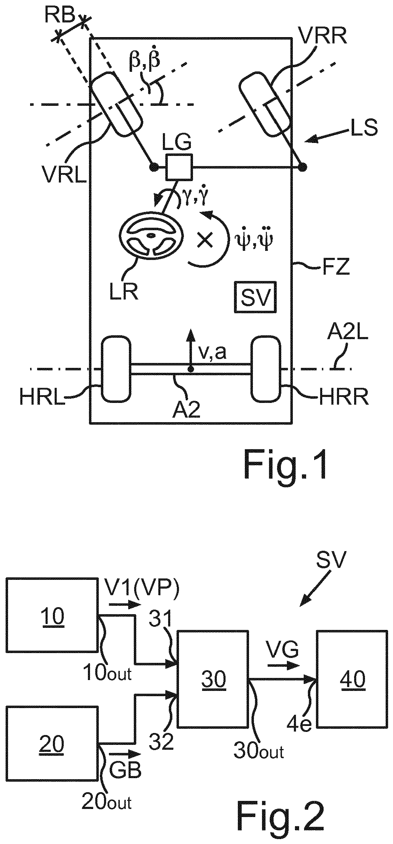

Eine Ausführungsform sieht vor, dass der Vortriebsbewegungsparameter einen Soll-Längsgeschwindigkeitswert und/oder einen Soll-Längsbeschleunigungswert umfasst. Die Erfindung kann für einen Ausgleich einer fahrtrichtungsabhängigen Beeinflussung der Fahrzeuglängsgeschwindigkeit und/oder für einen Ausgleich einer fahrtrichtungsabhängigen Beeinflussung der Fahrzeuglängsbeschleunigung angewendet werden. Zur Vereinfachung kann als Fahrzeuglängsgeschwindigkeit hier die Geschwindigkeit einer nichtgelenkten Achse des Fahrzeugs (typischerweise Hinterachse) quer zu ihrer Längsachse angesehen werden (siehe Bezugszeichen v in Fig. 1). Entsprechend kann hier die Beschleunigung einer nichtgelenkten Achse (typischerweise Hinterachse) quer zu ihrer Längsachse als Fahrzeuglängsbeschleunigung bezeichnet werden (siehe Bezugszeichen a in Fig. 1).

Eine weitere Ausführungsform sieht vor, dass der Längsgeschwindigkeitsbeeinflusser eine Längsgeschwindigkeitssteuerung, eine Bremssteuerung, eine Antriebssteuerung, eine Getriebesteuerung, eine Kupplungssteuerung und/oder einen Antriebsmomentenverteiler umfasst. Es richtet sich nach der konkreten Fahrzeugausstattung, welche Arten von Längsgeschwindigkeitsbeeinflussern überhaupt vorhanden sind, in die die Vorsteuergröße eingespeist werden kann, und welche der vorhandenen Längsgeschwindigkeitsbeeinflusser am besten dafür geeignet sind, eine unerwünschte Fahrtrichtungsabhängigkeit mittels einer Vorsteuergröße zu verringern oder zu eliminieren. Das für längsgeschwindigkeitsbeeinflussende Steuerungen Gesagte gilt auch dann, wenn die längsgeschwindigkeitsbeeinflussende Steuerung (Längsgeschwindigkeitsbeeinflusser) einen Regler umfasst. Der Längsgeschwindigkeitsbeeinflusser kann einen Längsgeschwindigkeitsregler, einen Bremsregler, einen Antriebsregler, einen Kupplungsregler, einen Getrieberegler und/oder einen Antriebsmomentenregler umfassen.

Bevorzugt ist es, wenn der Vorsteuergrößenerzeuger die Vorsteuergröße unter Berücksichtigung einer Reifenbreite ermittelt. Bei Lenkeinschlag ist der Fahrwiderstand typischerweise umso höher je breiter die Reifen der gelenkten Achse des Fahrzeugs sind.

Die vorliegende Erfindung wird nun anhand der beigefügten Zeichnungen näher erläutert, die jeweils ein Beispiel darstellen. Dabei zeigt:
- Fig. 1: schematisch einen Grundriss eines Fahrzeugs (Aufsicht);
- Fig. 2: schematisch eine Steuerungsvorrichtung des Fahrzeugs; und
- Fig. 3: schematisch einen Ablauf eines Verfahrens zum Ausgleichen einer fahrtrichtungsabhängigen Längsgeschwindigkeitsbeeinflussung eines Fahrzeugs.

Die nachfolgend näher beschriebenen Ausführungsbeispiele stellen bevorzugte Ausführungsformen der vorliegenden Erfindung dar.

Die Fig. 1 zeigt ein Fahrzeug FZ mit Vorderrädern VRL, VRR, Hinterrädern HRL, HRR, einem Lenkrad LR, einem Lenkgetriebe LG zum Antrieb eines Lenkgestänges LS.

Eingangs wurde erwähnt, dass bekannte Elektrofahrzeuge, deren Lenksystem entweder keinen lenkradwinkelabhängigen Leistungsbedarf aufweist, oder die (sogar) mit dem bekannten System zum vollständigen Ausgleich einer Lenkradwinkelabhängigkeit des Leistungsbedarfs eines Lenkungssystems ausgerüstet sind, folgende Eigenschaft aufweisen. Wird das Lenkrad beim Kriechen (Rollen mit eingelegter Fahrstufe ohne Betätigung des Fahrpedals) abrupt eingeschlagen, verlangt sich das Fahrzeug, bis eine Regelung greift und dem Längsgeschwindigkeitseinbruch entgegenwirkt. Diese Eigenschaft wird damit begründet, dass die gelenkten Räder VRL, VRR (typischerweise Vorderräder) im eingelenkten Zustand gegenüber der ursprünglichen Fahrtrichtung verschränkt sind. Die gelenkten Räder VRL, VRR haben im verschränkten Zustand einen höheren Fahrwiderstand. Je größer eine Breite RB der Reifen der gelenkten Achse ist, desto höher ist der Fahrwiderstand, der aufgrund der Verschränkung entsteht.

Ein Konzept der vorliegenden Erfindung sieht vor, dass in Abhängigkeit eines gemessenen Lenkwinkels β oder Lenkradwinkels γ ein Moment (Vorsteuermoment) vorgesteuert wird, welches einen Fahrwiderstand, der durch die Verschränkung der gelenkten Räder entsteht, ausgleicht und somit einen Geschwindigkeitseinbruch beim abrupten Einlenken verhindert. Das Vorsteuermoment kann bei einer Berechnung von Vortriebsmomenten im Antriebsstrang berücksichtigt werden.

Das in der Fig. 1 gezeigte Fahrzeug FZ weist daher auch eine Steuervorrichtung SV zum Ausgleichen einer fahrtrichtungsabhängigen Längsgeschwindigkeitsbeeinflussung des Fahrzeugs FZ auf.

Die in Fig. 2 gezeigte Steuerungsvorrichtung SV umfasst eine erste Vorrichtung 10 zum Ermitteln einer ersten Vorgabe V1 für einen Vortriebsbewegungsparameter VP eines Fahrzeugs FZ, einen Gierbewegungserfasser 20 zum Ermitteln einer Gierbewegungsgröße GB des Fahrzeugs FZ und einen Längsgeschwindigkeitsbeeinflusser 40 zum Beeinflussen einer Längsgeschwindigkeit v des Fahrzeugs FZ. Die erste Vorrichtung 10 weist einen ersten Ausgang 10out zum Ausgeben der ersten Vorgabe V1 auf. Der Gierbewegungserfasser 20 weist einen zweiten Ausgang 20out zum Ausgeben der ermittelten Gierbewegungsgröße GB auf. Außerdem weist die Steuerungsvorrichtung SV einen Vorsteuergrößenerzeuger 30 zum Erzeugen einer Vorsteuergröße VG auf, wobei der Vorsteuergrößenerzeuger 30 einen ersten 31 und einen zweiten 32 Eingang und einen dritten Ausgang 30out aufweist. Der erste Eingang 31 ist mit dem ersten Ausgang 10out verbunden. Der zweite Eingang 32 ist mit dem zweiten Ausgang 20out verbunden. Der dritte Ausgang 30out ist mit einem Vorsteuereingang 4e des Längsgeschwindigkeitsbeeinflussers 40 verbunden.

Die Gierbewegungsgröße GB kann eine Gierwinkelgeschwindigkeit Ψ° und/oder eine Gierwinkelbeschleunigung Ψ°° umfassen. Ein Teil des Fahrwiderstandes kann in erster Linie von einer Gierwinkelgeschwindigkeit Ψ°, von einer Gierwinkelbeschleunigung Ψ°° oder von beidem zugleich abhängig sein. Die Gierwinkelgeschwindigkeit Ψ° kann auch als Gierrate bezeichnet werden.

Der Gierbewegungserfasser 20 kann dazu vorbereitet sein, die Gierwinkelgeschwindigkeit Ψ° aus einer Radstellung, aus einem Lenkeinschlag β und/oder aus einem Lenkradwinkel γ in Verbindung mit einer Fahrzeuglängsgeschwindigkeit v abzuleiten.

Alternativ oder zusätzlich kann der Gierbewegungserfasser 20 dazu vorbereitet sein, die Gierwinkelbeschleunigung Ψ°° aus einer Radstellung, aus einem Lenkeinschlag β und/oder aus einem Lenkradwinkel γ in Verbindung mit einer Fahrzeuglängsbeschleunigung a abzuleiten. Unabhängig davon kann der Gierbewegungserfasser 20 dazu vorbereitet sein, die Gierwinkelbeschleunigung Ψ°° aus einer Radstellungsänderung, aus einer Lenkeinschlagsänderung β° und/oder aus einer Lenkradwinkeländerung γ° in Verbindung mit einer Fahrzeuglängsgeschwindigkeit v und/oder in Verbindung mit einer Fahrzeuglängsbeschleunigung a abzuleiten. Jede dieser Maßnahmen kann für sich oder in Kombination dazu geeignet sein, die Gierwinkelbeschleunigung Ψ°° in einfacher Weise zu ermitteln.

Ein Verlauf der Vorsteuergröße VG kann über der Gierbewegungsgröße GB oder über dem Lenkeinschlag β oder über dem Lenkradwinkel γ progressiv verlaufen. Hiermit kann eine nichtlinearer Zusammenhang zwischen Fahrwiderstand und Lenkeinschlag oder zwischen Fahrwiderstand und Lenkradwinkel γ berücksichtigt werden.

Der Vortriebsbewegungsparameter VP kann einen Soll-Längsgeschwindigkeitswert und/oder einen Soll-Längsbeschleunigungswert umfassen. Die Erfindung kann sowohl für einen Ausgleich einer fahrtrichtungsabhängigen Beeinflussung der Fahrzeuglängsgeschwindigkeit v und/oder für einen Ausgleich einer fahrtrichtungsabhängigen Beeinflussung der Fahrzeuglängsbeschleunigung a angewendet werden. Zur Vereinfachung kann als Fahrzeuglängsgeschwindigkeit v hier die Geschwindigkeit einer nichtgelenkten Achse A2 des Fahrzeugs FZ (typischerweise Hinterachse) quer zu ihrer Längsachse A2L angesehen werden (siehe Bezugszeichen v in Fig. 1). Entsprechend kann hier die Beschleunigung a einer nichtgelenkten Achse A2 (typischerweise Hinterachse) quer zu ihrer Längsachse A2L als Fahrzeuglängsbeschleunigung a bezeichnet werden (siehe Bezugszeichen a in Fig. 1).

Der Längsgeschwindigkeitsbeeinflusser 40 kann eine Längsgeschwindigkeitssteuerung, eine Bremssteuerung, eine Antriebssteuerung, eine Getriebesteuerung, eine Kupplungssteuerung und/oder einen Antriebsmomentenverteiler umfassen. Es richtet sich nach der konkreten Fahrzeugausstattung, welche Arten von Längsgeschwindigkeitsbeeinflussern überhaupt vorhanden sind, in die die Vorsteuergröße eingespeist werden kann, und welche der vorhandenen Längsgeschwindigkeitsbeeinflusser am besten dafür geeignet sind, eine unerwünschte Fahrtrichtungsabhängigkeit mittels einer Vorsteuergröße VG zu verringern oder zu eliminieren. Das für längsgeschwindigkeitsbeeinflussende Steuerungen Gesagte gilt auch dann, wenn die längsgeschwindigkeitsbeeinflussende Steuerung (der Längsgeschwindigkeitsbeeinflusser 40) einen Regler umfasst. Der Längsgeschwindigkeitsbeeinflusser 40 kann einen Längsgeschwindigkeitsregler, einen Bremsregler, einen Antriebsregler, einen Kupplungsregler, einen Getrieberegler und/oder einen Antriebsmomentenregler umfassen.

Der Vorsteuergrößenerzeuger 30 kann die Vorsteuergröße VG unter Berücksichtigung einer Reifenbreite RB ermitteln. Bei Lenkeinschlag kann der Fahrwiderstand typischerweise umso höher sein je breiter die Reifen der gelenkten Achse des Fahrzeugs sind.

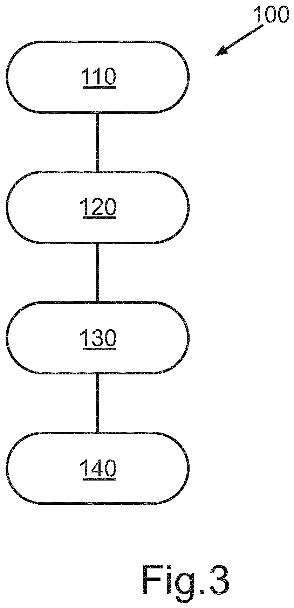

Das in Fig. 3 gezeigte Verfahren 100 zum Ausgleichen einer fahrtrichtungsabhängigen Längsgeschwindigkeitsbeeinflussung eines Fahrzeugs FZ umfasst folgende Schritte. In einem ersten Schritt 110 wird eine Vorgabe V1 für einen Vortriebsbewegungsparameter VP des Fahrzeugs FZ ermittelt. In einem zweiten Schritt 120 wird eine Gierwinkelgeschwindigkeit Ψ° und/oder eine Gierwinkelbeschleunigung Ψ°° des Fahrzeugs FZ ermittelt. In einem dritten Schritt 130 wird eine Vorsteuergröße VG unter Berücksichtigung der ermittelten Vorgabe V1 für den Vortriebsbewegungsparameter VP und unter Berücksichtigung der ermittelten Gierwinkelgeschwindigkeit Ψ° ermittelt. Alternativ oder in Kombination kann die Vorsteuergröße VG in dem dritten Schritt 130 unter Berücksichtigung der ermittelten Vorgabe V1 für den Vortriebsbewegungsparameter VP und/oder Berücksichtigung der ermittelten Gierwinkelbeschleunigung Ψ°° des Fahrzeugs FZ ermittelt werden. In einem vierten Schritt 140 wird eine Vorsteuergröße VG in einem Längsgeschwindigkeitsbeeinflusser 40 des Fahrzeugs FZ verwendet.

## Patentansprüche

1. Steuerungsvorrichtung (SV) umfassend:
- eine erste Vorrichtung (10) zum Ermitteln einer ersten Vorgabe (V1) für einen Vortriebsbewegungsparameter (VP) eines Fahrzeugs (FZ), wobei die erste Vorrichtung (10) einen ersten Ausgang (10out) zum Ausgeben der ersten Vorgabe (V1) aufweist;
- einen Gierbewegungserfasser (20) zum Ermitteln einer Gierbewegungsgröße (GB) des Fahrzeugs (FZ), wobei der Gierbewegungserfasser (20) einen zweiten Ausgang (20out) zum Ausgeben der ermittelten Gierbewegungsgröße (GB) aufweist;
- einen Längsgeschwindigkeitsbeeinflusser (40) zum Beeinflussen einer Längsgeschwindigkeit (v) des Fahrzeugs (FZ);
**dadurch gekennzeichnet, dass**
die Steuerungsvorrichtung (SV) auch einen Vorsteuergrößenerzeuger (30) zum Erzeugen einer Vorsteuergröße (VG) aufweist, wobei der Vorsteuergrößenerzeuger (30) einen ersten Eingang (31) aufweist, der mit dem ersten Ausgang (10out) verbunden ist, einen zweiten Eingang (32) aufweist, der mit dem zweiten Ausgang (20out) verbunden ist, und einen dritten Ausgang (30out) aufweist, der mit einem Vorsteuereingang (4e) des Längsgeschwindigkeitsbeeinflussers (40) verbunden ist.

2. Steuerungsvorrichtung (SV) nach Anspruch 1, **dadurch gekennzeichnet, dass** die Gierbewegungsgröße (GB) eine Gierwinkelgeschwindigkeit (Ψ°) und/oder eine Gierwinkelbeschleunigung (Ψ°°) umfasst.

3. Steuerungsvorrichtung (SV) nach Anspruch 1 oder 2, **dadurch gekennzeichnet, dass** der Gierbewegungserfasser (20) dazu vorbereitet ist, die Gierwinkelgeschwindigkeit (Ψ°) aus einer Radstellung, aus einem Lenkeinschlag (β) und/oder aus einem Lenkradwinkel (γ) in Verbindung mit einer Fahrzeuglängsgeschwindigkeit (v) abzuleiten.

4. Steuerungsvorrichtung (SV) nach einem der Ansprüche 1 bis 3, **dadurch gekennzeichnet, dass** der Gierbewegungserfasser (20) dazu vorbereitet ist, die Gierwinkelbeschleunigung (Ψ°°) aus einer Radstellung, aus einem Lenkeinschlag (β) und/oder aus einem Lenkradwinkel (γ) in Verbindung mit einer Fahrzeuglängsbeschleunigung (a) abzuleiten und/oder dass der Gierbewegungserfasser (20) dazu vorbereitet ist, die Gierwinkelbeschleunigung (Ψ°°) aus einer Radstellungsänderung, aus einer Lenkeinschlagsänderung (β°) und/oder aus einer Lenkradwinkeländerung (γ°) in Verbindung mit einer Fahrzeuglängsgeschwindigkeit (v) und/oder in Verbindung mit einer Fahrzeuglängsbeschleunigung (a) abzuleiten.

5. Steuerungsvorrichtung (SV) nach einem der Ansprüche 1 bis 4, **dadurch gekennzeichnet, dass** ein Verlauf der Vorsteuergröße (VG) über der Gierbewegungsgröße (GB) oder über dem Lenkeinschlag (β) oder über dem Lenkradwinkel (γ) progressiv verläuft.

6. Steuerungsvorrichtung (SV) nach einem der Ansprüche 1 bis 5, **dadurch gekennzeichnet, dass** der Vortriebsbewegungsparameter (VP) einen Soll-Längsgeschwindigkeitswert und/oder einen Soll-Längsbeschleunigungswert umfasst.

7. Steuerungsvorrichtung (SV) nach einem der Ansprüche 1 bis 6, **dadurch gekennzeichnet, dass** der Längsgeschwindigkeitsbeeinflusser (40) eine Längsgeschwindigkeitssteuerung, eine Bremssteuerung, eine Antriebssteuerung, eine Getriebesteuerung, eine Kupplungssteuerung und/oder einen Antriebsmomentenverteiler umfasst.

8. Steuerungsvorrichtung (SV) nach einem der Ansprüche 1 bis 7, **dadurch gekennzeichnet, dass** der Vorsteuergrößenerzeuger (30) die Vorsteuergröße (VG) unter Berücksichtigung einer Reifenbreite (RB) ermittelt.

9. Fahrzeug (FZ),
**dadurch gekennzeichnet, dass**
das Fahrzeug (FZ) eine Steuerungsvorrichtung (SV) nach einem der Ansprüche 1 bis 8 umfasst.

10. Verfahren (100) zum Ausgleichen einer fahrtrichtungsabhängigen Längsgeschwindigkeitsbeeinflussung eines Fahrzeugs (FZ), wobei das Verfahren (100) folgende Schritte umfasst:
- Ermitteln (110) einer Vorgabe (V1) für einen Vortriebsbewegungsparameter (VP) des Fahrzeugs (FZ);
- Ermitteln (120) einer Gierwinkelgeschwindigkeit (Ψ°) und/oder einer Gierwinkelbeschleunigung (Ψ°°) des Fahrzeugs (FZ);
- Ermitteln (130) einer Vorsteuergröße (VG) unter Berücksichtigung der ermittelten Vorgabe (V1) für den Vortriebsbewegungsparameter (VP) und unter Berücksichtigung der ermittelten Gierwinkelgeschwindigkeit (Ψ°) und/oder der ermittelten Gierwinkelbeschleunigung (Ψ°°) des Fahrzeugs (FZ); und
- Verwenden (140) der Vorsteuergröße (VG) in einem Längsgeschwindigkeitsbeeinflusser (40) des Fahrzeugs (FZ).

## Claims

1. Control device (SV) including:
- a first device (10) for determining a first specification (V1) for a propulsion movement parameter (VP) of a vehicle (FZ), wherein the first device (10) comprises a first output (10out) for outputting the first specification (V1);
- a yaw movement detector (20) for determining a yaw movement quantity (GB) of the vehicle (FZ), wherein the yaw movement detector (20) comprises a second output (20out) for outputting the determined yaw movement quantity (GB);
- a longitudinal speed influencer (40) for influencing a longitudinal speed (v) of the vehicle (FZ);
**characterized in that**
the control device (SV) also comprises a pilot control quantity generator (30) for generating a pilot control quantity (VG), wherein the pilot control quantity generator (30) comprises a first input (31), which is connected to the first output (10out), comprises a second input (32), which is connected to the second output (20out), and comprises a third output (30out), which is connected to a pilot control input (4e) of the longitudinal speed influencer (40).

2. Control device (SV) according to claim 1, **characterized in that** the yaw movement quantity (GB) includes a yaw angular speed (Ψ°) and/or a yaw angular acceleration (Ψ°°).

3. Control device (SV) according to claim 1 or 2, **characterized in that** the yaw movement detector (20) is prepared to derive the yaw angular speed (Ψ°) from a wheel position, from a steering angle (β) and/or from a steering wheel angle (γ) in connection with a vehicle longitudinal speed (v).

4. Control device (SV) according to any one of claims 1 to 3, **characterized in that** the yaw movement detector (20) is prepared to derive the yaw angular acceleration (Ψ°°) from a wheel position, from a steering angle (β) and/or from a steering wheel angle (γ) in connection with a vehicle longitudinal acceleration (a), and/or that the yaw movement detector (20) is prepared to derive the yaw angular acceleration (Ψ°°) from a wheel position change, from a steering angle change (β°) and/or from a steering wheel angle change (γ°) in connection with a vehicle longitudinal speed (v) and/or in connection with a vehicle longitudinal acceleration (a).

5. Control device (SV) according to any one of claims 1 to 4, **characterized in that** a progression of the pilot control quantity (VG) progressively proceeds over the yaw movement quantity (GB) or over the steering angle (β) or over the steering wheel angle (γ).

6. Control device (SV) according to any one of claims 1 to 5, **characterized in that** the propulsion movement parameter (VP) includes a longitudinal speed set value and/or a longitudinal acceleration set value.

7. Control device (SV) according to any one of claims 1 to 6, **characterized in that** the longitudinal speed influencer (40) includes a longitudinal speed control, a brake control, a drive control, a gear control, a clutch control and/or a drive torque distributor.

8. Control device (SV) according to any one of claims 1 to 7, **characterized in that** the pilot control quantity generator (30) determines the pilot control quantity (VG) considering a tire width (RB).

9. Vehicle (FZ),
**characterized in that**
the vehicle (FZ) includes a control device (SV) according to any one of claims 1 to 8.

10. Method (100) for compensating for a longitudinal speed influence depending on direction of travel of a vehicle (FZ), wherein the method (100) includes the following steps of:
- determining (110) a specification (V1) for a propulsion movement parameter (VP) of the vehicle (FZ);
- determining (120) a yaw angular speed (Ψ°) and/or a yaw angular acceleration (Ψ°°) of the vehicle (FZ);
- determining (130) a pilot control quantity (VG) considering the determined specification (V1) for the propulsion movement parameter (VP) and considering the determined yaw angular speed (Ψ°) a and/or the determined yaw angular acceleration (Ψ°°) of the vehicle (FZ); and
- using (140) the pilot control quantity (VG) in a longitudinal speed influencer (40) of the vehicle (FZ).

## Revendications

1. Dispositif de commande (SV) comprenant :
- un premier dispositif (10) pour déterminer une première consigne (V1) pour un paramètre de déplacement de propulsion (VP) d'un véhicule (FZ), ce premier dispositif (10) disposant d'une sortie (10out) destinée à la sortie de cette première consigne (V1) ;
- un détecteur de mouvement de lacet (20) pour déterminer la grandeur de mouvement de lacet (GB) du véhicule (FZ), ce détecteur de mouvement de lacet (20) disposant d'une deuxième sortie (20out) destinée à la sortie de la grandeur de mouvement de lacet (GB) déterminée ;
- un dispositif d'action sur la vitesse longitudinale (40) pour agir sur la vitesse longitudinale (v) du véhicule (FZ) ;
**caractérisé par le fait que** le dispositif de commande (SV) dispose également d'un générateur de grandeur de pilotage (30) destiné à la génération d'une grandeur de pilotage (VG). Le générateur de grandeur de pilotage (30) présente une première entrée (31) qui est liée à la première sortie (10out), une deuxième entrée (32) qui est liée à la deuxième sortie (20out), et une troisième sortie (30out) qui est liée à une entrée de pilotage (4e) du dispositif d'action sur la vitesse longitudinale (40).

2. Le dispositif de commande (SV) selon la revendication 1 est **caractérisé par le fait que** la grandeur de mouvement de lacet (GB) comprenne une vitesse angulaire de lacet et/ou une accélération angulaire de lacet.

3. Le dispositif de commande (SV) selon la revendication 1 ou 2 est **caractérisé par le fait que** le détecteur de mouvement de lacet (20) soit prévu pour déterminer la vitesse angulaire de lacet à partir d'une position des roues, d'un braquage (β) et/ou d'un angle de volant (y) en l'associant à la vitesse longitudinale (v) du véhicule.

4. Le dispositif de commande (SV) selon l'une des revendications 1 à 3 est **caractérisé par le fait que** le détecteur de mouvement de lacet (20) soit prévu pour déterminer l'accélération angulaire de lacet à partir d'une position des roues, d'un braquage (β) et/ou d'un angle de volant (y) en l'associant à une accélération longitudinale (a) du véhicule et/ou que le détecteur de mouvement de lacet (20) soit prévu pour déterminer l'accélération angulaire de lacet à partir d'un changement de position des roues, d'un changement de braquage et/ou d'un changement d'angle de volant en l'associant à une vitesse longitudinale (v) du véhicule et/ou à une accélération longitudinale (a) du véhicule.

5. Le dispositif de commande (SV) selon l'une des revendications 1 à 4 est **caractérisé par le fait que** la courbe de la grandeur de pilotage (VG) en fonction de la grandeur de mouvement de lacet (GB) ou du braquage (β) ou de l'angle de volant (y) soit progressive.

6. Le dispositif de commande (SV) selon l'une des revendications 1 à 5 est **caractérisé par le fait que** le paramètre de déplacement de propulsion (VP) comprenne une valeur de vitesse longitudinale cible et/ou une valeur d'accélération longitudinale cible.

7. Le dispositif de commande (SV) selon l'une des revendications 1 à 6 est **caractérisé par le fait que** le dispositif d'action sur la vitesse longitudinale (40) comprenne une commande de vitesse longitudinale, une commande de freinage, une commande de traction, une commande de transmission, une commande d'embrayage et/ou d'un distributeur de couple moteur.

8. Le dispositif de commande (SV) selon l'une des revendications 1 à 7 est **caractérisé par le fait que** le générateur de grandeur de pilotage (30) détermine la grandeur de pilotage (VG) en tenant compte de la largeur des pneus (RB).

9. Le véhicule (FZ) est **caractérisé par le fait qu'**il comprenne un dispositif de commande (SV) selon l'une des revendications 1 à 8.

10. Procédé (100) de compensation d'une influence de la vitesse longitudinale fonction du sens de déplacement d'un véhicule (FZ), ce procédé (100) comprenant les étapes suivantes :
- Détermination (110) d'une consigne (V1) pour un paramètre de déplacement de propulsion (VP) du véhicule (FZ) ;
- Détermination (120) d'une vitesse angulaire de lacet et/ou d'une accélération angulaire de lacet du véhicule (FZ) ;
- Détermination (130) d'une grandeur de pilotage (VG) en tenant compte de la consigne (V1) déterminée pour le paramètre de déplacement de propulsion (VP) et de la vitesse angulaire de lacet déterminée et/ou de l'accélération angulaire de lacet déterminée du véhicule ; et
- Utilisation (140) de la grandeur de pilotage (VP) dans un dispositif d'action sur la vitesse longitudinale (40) du véhicule (FZ).
